# EUROPEAN PATENT SPECIFICATION

(11) **EP 2 332 707 B1**
(45) Date of publication and mention of the grant of the patent: **14.08.2013**
(21) Application number: 09812935.6
(22) Date of filing: 24.03.2009
(51) Int. Cl.: B28B 13/00

(54) **FORMWORK APPARATUS FOR SOLIDIFIED SULFUR PRODUCT**
SCHALUNGSVORRICHTUNG FÜR EIN GEHÄRTETES SCHWEFELPRODUKT
APPAREIL DE COFFRAGE POUR PRODUIT DE SOUFRE SOLIDIFIÉ

(30) Priority: 12.09.2008 JP 2008234316
(43) Date of publication of application: 15.06.2011
(73) Proprietor: Nippon Oil Corporation, Tokyo 105-8412 (JP); Fuji Concrete Industry Co., Ltd., Saga 843-0233 (JP)
(72) Inventor: KURAKAKE, Minoru, Tokyo 105-8412 (JP); HORII, Hideyuki, Tokyo 105-8412 (JP); TOMINAGA, Yoshifumi, Takeo-shi Saga 843-0233 (JP); YAMAGUCHI, Yasunori, Takeo-shi Saga 843-0233 (JP)
(74) Representative: Vollmann, Heiko
(86) International application number: PCT/JP2009/055785
(87) International publication number: WO 2010/029787

(56) References cited:
- WO-A2-01/43930
- FR-A- 855 560
- JP-A- 2006 095 847
- JP-A- 2007 203 486
- JP-A- 2007 203 486
- JP-A- 2007 261 865
- JP-A- 2007 320 824
- US-A- 2 875 556

## Description

### TECHNICAL FIELD

The present invention relates to a molding apparatus for modified sulfur concrete substance product, which fills a sulfur-containing material in a melted state into a cavity of a mold body and then cools and solidifies the sulfur-containing material to mold the modified sulfur concrete substance product. More specifically, the present invention relates to a molding apparatus for modified sulfur concrete substance product which, as a sulfur-containing material filled into a cavity is cooled and contracted, replenishes the sulfur-containing material in a filling tank in a pressurized state into the cavity.

### BACKGROUND ART

Generally, concrete obtained by combining aggregates by cement is used as civil-engineering material and constructing material. The sulfur recently receives an attention due to the characteristic that sulfur is a solid at room temperature while melted upon being heated to about 119 to 159°C, and it is attempted that the sulfur is utilized as a civil-engineering material and a construction material by mixing a predetermined sample or predetermined samples in it. It is known that the sulfur-containing material using the sulfur has high strength, an excellent water-sealing property and high acid resistance, as compared with the usual concrete using cement. Further, since the sulfur-containing material is apparently similar to a usual concrete in finishing and handling, sometimes the solidified sulfur-containing material is called sulfur concrete substance (for example, refer to Patent literature 1).

Since, sulfur has ignition property and is dealt with a hazardous material. It is difficult to perform construction by melting, casting and solidifying the sulfur material on site. Therefore, in order to improve such a situation, it is attempted that the sulfur is denatured to produce modified sulfur by mixing a sulfur modifying agent as an additive into molten sulfur. Further, it is attempted that a modified sulfur intermediate material in a melt state is produced by mixing the modified sulfur and fine powders, and a modified sulfur concrete substance is produced by mixing the modified sulfur intermediate material with the aggregate and solidifying the mixture (for example, refer to Patent literature 2).

Further, in order to form the sulfur concrete substance or the modified sulfur concrete substance by making the sulfur-containing material (or the modified sulfur intermediate material) in a melted state cooled and solidified, the sulfur-containing material is filled into a mold having a predetermined shape and is then cooled and solidified.

There is not a dedicated mold for filling, cooling, and solidifying the sulfur-containing material. As a mold for molding a usual concrete product, there is a mold for filling concrete into a cavity formed between an outer mold and an inner mold to produce a cylindrical concrete product and the like (for example, refer to Patent literature 3 and Patent literature 4).

Patent literature 1: Japanese Laid-Open(Kokai) Patent Application Publication No. 2004-160693
Patent literature 2: Japanese Laid-Open(Kokai) Patent Application Publication No. 2005-82475
Patent literature 3: Japanese Laid-Open(Kokai)Patent Application Publication No. 2002-337129
Patent literature 4: Japanese Laid-Open(Kokai)Patent Application Publication No. 2004-114388

JP 2007-320824 A discloses an apparatus for manufacturing a sulfur concrete substance, including: a mold form capable of heating and cooling, the mold form having a cavity into which a sulfur-containing material in a melted state is supplied; a thermal insulating and heating device including heating means, the upper portion of the cavity being covered by the thermal insulating and heating device. In the apparatus, when the sulfur-containing material in a melted state is supplied into the cavity while heating the mold form and then the mold form is cooled to thereby solidify the sulfur-containing material, the upper surface of the sulfur-containing material is heated by using the thermal insulating and heating device, so that a sulfur concrete substance product in which it is difficult to generate bubbles is manufactured.

JP 2006-095847 A discloses a manufacturing method for a sulfur-containing material molded product, in which a rod-like vibrating portion which maintains the outer surface temperature thereof at about 120 °C to 160 °C is directly inserted into the sulfur-containing material in a melted state in a mold form to be vibrated, to thereby delete bubbles in the sulfur-containing material, and thus, a sulfur-containing material molded product with high and uniform strength and excellent surface thereof is obtained.

JP 2007-261865 A discloses a mold form for manufacturing a sulfur product and a method for manufacturing the sulfur product by using the mold form. The mold form has a cavity surrounded by a bottom portion and side portions, and each of the bottom portion and side portions has double plates to forms team chambers. Steeam flows into the steam chambers to heat the cavity, to thereby prevent sulfur-containing material flown into the cavity from rapidly cooling. As a result, it is possible to manufacture a sulfur concrete substance the surface of which is smooth.

JP 2007-203486 A discloses a method and apparatus for manufacturing a lightweight modified sulfur concrete substance capable of arranging lightweight aggregate, which has a density lower than that of a modified sulfur concrete substance easily and homogeneously to solidify the same. The method includes the following process: (A) filling a mold form, which is thermally controlled by heat control means with the lightweight aggregate (LA); (B) pressing and fixing the lightweight aggregate (LA) from the area above the lightweight aggregate (LA) by using pressing means having pores; (C) injecting the molten modifies sulfur-containing material into the form in a state in which the temperature of the lightweight aggregate (LA) in the form is controlled to 120-160 °C; and (D) cooling the form to solidify the injected molten modified sulfur-containing material.

WO O1 /43930 A2 discloses a method for forming a concrete element, and a frame used therein.

### DISCLOSURE OF THE INVENTION

### PROBLEMS TO BE SOLVED BY THE INVENTION

However, a means for heating the outer mold and the inner mold is not provided in the molds described in the above Patent literatures 3 and 4. The sulfur-containing material in a melted state starts to solidify at the time point when the temperature is below solidification temperature (about 119°C) of the sulfur and solidified to have high strength which is equal to or higher than that of usual concrete. Conventionally, when the sulfur-containing material in a melted state solidifies, a part which is in contact with the mold when the material is poured into the mold is cooled rapidly, so that a problem occurs such that the surface of the sulfur concrete substance or the modified sulfur concrete substance removed from the mold is rough.

Further, the sulfur-containing material in a melted state filled into the mold is contracted in the process of cooling and solidification. Thus, even when the sulfur-containing material is fully filled to the upper surface portion of the mold, it is sunk, thereby causing a gap in the upper portion of the product, so that a specification requirement of the product may not be satisfied. In this case, up to now, the sulfur-containing material is coated onto the product taken out by dividing the mold into two parts for repair, however, this requires excessive time and labor, and also, finishing is poor to deteriorate the value of the product. Furthermore, when the gap is large, the product may not be repaired.

Still further, the sulfur-containing material is injected into the mold without covering a filling port of the mold and the upper surface of the sulfur-containing material filled into the mold is sunk to cause a gap, and thereafter, the sulfur-containing material is replenished. During that, the surface of the sulfur-containing material starts to solidify to generate a hardened layer, so that the strength of the product is weakened. In this case, a performance requirement of the product may not be satisfied.

In view of the above described problems, an object of the present invention is to provide a molding apparatus for modified sulfur concrete substance product which, as a sulfur-containing material filled into a cavity is cooled and contracted, replenishes the sulfur-containing material in a filling tank in a pressurized state into the cavity.

### MEANS FOR SOLVING THE PROBLEMS

In order to achieve the above object, a molding apparatus for modified sulfur concrete substance product is providing according to claim 1. Preferred embodiments are defined the dependent claims.

With such configuration, as the sulfur-containing material fully filled into the cavity of the mold body in which the inside of the outer mold having the cavity which can be hermetically sealed is heated to a temperature within the preset temperature range of which a lower limit is equal to or above a melting point of sulfur, is cooled and contracted in the cavity, the sulfur-containing material stored in the filling tank in which the cover is attached to the upper end opening thereof, so that the inside of the filling tank can be hermetically sealed, and the inside of the filling tank is pressurized to a predetermined pressure, and also, the inside of the filling tank is heated to a temperature within the preset temperature range, is replenished into the cavity by the pressure in the filling tank. Namely, as the sulfur-containing material is cooled and contracted in the cavity of the mold body, the sulfur-containing material in the contracted amount can be automatically replenished from the filling tank. Accordingly, this does not require excessive time and labor. Further, the strength of the modified sulfur concrete substance product is increased, and also, finishing becomes good to enhance the value of the product.

The volume of the filling tank is equal to or larger than the volume of the sulfur-containing material fully filled into the cavity of the mold body, which is cooled and contracted. Therefore, the sulfur-containing material is replenished from the filling tank by the volume of the sulfur-containing material fully filled into the cavity of the mold body, which is cooled and contracted. Consequently, the sulfur-containing material can be automatically replenished from the filling tank by the amount of the sulfur-containing material contracted in the cavity of the mold body.

Still further, in order to heat the mold body and the filling tank to a temperature within the preset temperature range of which a lower limit is equal to or above a melting point of sulfur, heating means is attached to each of the mold body and the filling tank. The heating means attached to each of the components themselves heats the mold body and the filling tank to a temperature within the preset temperature range of which a lower limit is equal to or above a melting point of sulfur. Thus, the temperature of the mold body and the filling tank can be maintained at a temperature equal to or above a melting point of the sulfur, and the sulfur-containing material in a melted state can be filled from the filling tank into the cavity of the mold body.

Still further, one or a plurality of the filling ports of the mold body are provided in a part of the outer mold, and one or a plurality of the filling tanks are attached to the mold body. One or a plurality of the filling tanks are attached according to the volume of the mold body. Accordingly, the present invention can respond to the mold bodies having various volumes, in addition, the mold bodies positioned in tilted, vertical, and horizontal states.

### EFFECT OF THE INVENTION

In the invention according to claim 1, as the sulfur-containing material fully filled into the cavity of the mold body in which the inside of the outer mold having the sealable cavity is heated within the setting temperature range of a sulfur melting point or above is cooled and contracted in the cavity, the sulfur-containing material stored in the filling tank in which the cover is attached to the upper end opening so that the inside of the filling tank can be sealed, the inside of the filling tank is pressurized to a predetermined pressure, and the inside of the filling tank is heated within the setting temperature range can be filled into the cavity by the pressure in the filling tank. As the sulfur-containing material is cooled and contracted in the cavity of the mold body, the sulfur-containing material in the contracted amount can be automatically filled from the filling tank. This does not require excessive time and labor. In addition, the strength of the sulfur solidified substance product is increased and the finishing becomes good, thereby enhancing the product value.

In the invention according to claim 2, the volume of the filling tank is equal to or larger than the volume of the sulfur-containing material fully filled into the cavity of the mold body, which is cooled and contracted. The sulfur-containing material can be filled from the filling tank by the volume of the sulfur-containing material fully filled into the cavity of the mold body, which is cooled and contracted. Therefore, the sulfur-containing material can be automatically filled from the filling tank by the amount of the sulfur-containing material contracted in the cavity of the mold body.

In the invention according to claim 3, to heat the mold body and the filling tank within the setting temperature range of a sulfur melting point or above, heating means is attached to each of the components themselves. The heating means attached to each of the components themselves can heat the mold body and the filling tank within the setting temperature range of a sulfur melting point or above. Therefore, the temperature of the mold body and the filling tank is maintained at the sulfur melting point or above so that the sulfur-containing material in a melted state can be filled from the filling tank into the cavity of the mold body.

In the invention according to claim 4, one or a plurality of the filling ports of the mold body are provided in a portion or portions of the outer mold, and one or a plurality of the filling tanks are attached to the mold body. Accordingly, one or a plurality of the filling tanks can be attached according to the volume of the mold body. The invention can respond to the mold bodies having various volumes. The invention can also respond to the mold bodies of tilted, vertical, and horizontal types.

### BRIEF DESCRIPTION OF THE DRAWINGS

Fig. 1 is a schematic view illustrating an embodiment of a molding apparatus for modified sulfur concrete substance product according to the present invention;
Fig. 2 is a front view illustrating a filling tank of the molding apparatus;
Fig. 3 is a perspective view illustrating a mold body of the molding apparatus;
Fig. 4 is a perspective view illustrating the state before the filling tank is attached to the mold body;
Fig. 5 is a perspective view illustrating the state after the filling tank is attached to the mold body;
Fig. 6 is a perspective view illustrating the state that a cover and pressurizing means are attached to the filling tank;
Figs. 7A and 7B are perspective views illustrating the state that a sulfur-containing material is automatically replenished from the filling tank into the mold body, in which Fig. 7A is a view illustrating a state before filling and Fig. 7B is a view illustrating a state after filling;
Fig. 8 is a perspective view illustrating another embodiment of the molding apparatus of the present invention; and
Fig. 9 is a perspective view illustrating a further embodiment of the molding apparatus of the present invention.

### DESCRIPTION OF THE REFERENCE SYMBOLS

- 1: Mold body
- 2: Filling tank
- 4: Introducing hopper
- 5: Inner mold
- 6: Outer mold
- 7: End plate
- 8: Filling port
- 11: Upper end opening
- 12: Lower end filling port
- 13: Cover
- 15: Supply pipe
- 18: Attaching pipe
- 19: Attaching plate
- 20: Fastener

### BEST MODE FOR CARRYING OUT THE INVENTION

Preferred embodiments of the present invention will be described below in detail with reference to the accompanying drawings.

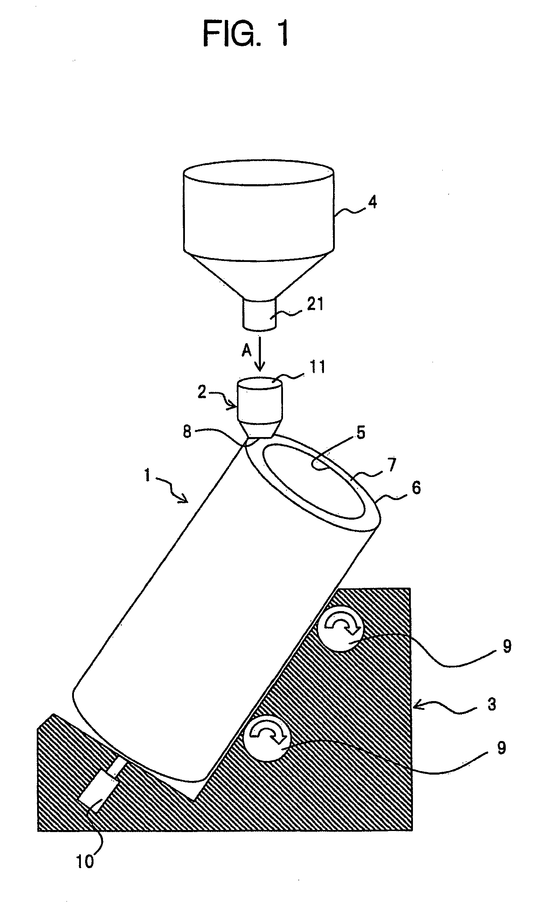

Fig. 1 is a schematic view illustrating an embodiment of a molding apparatus for modified sulfur concrete substance product according to the present invention.

The molding apparatus for modified sulfur concrete substance product fills a sulfur-containing material in a melted state into a cavity of a mold body and then cools and solidifies the sulfur-containing material to mold the modified sulfur concrete substance product. As illustrated in Fig. 1, the molding apparatus for modified sulfur concrete substance product has a mold body 1 and a filling tank 2. In Fig. 1, the reference numeral 3 denotes a vibrating table supporting mold body 1 positioned in a tilted state, and the reference numeral 4 denotes an injecting hopper supplying the sulfur-containing material into filling tank 2.

Mold body 1 fills the sulfur-containing material in a melted state therein and then cools and solidifies the sulfur-containing material.

Mold body 1 is made of metal such as steel or aluminum, and is formed in a shape adapted to the shape of the modified sulfur concrete substance product to be produced. For example, mold body 1 illustrated in Fig. 1 is used to produce a cylindrical modified sulfur concrete substance product, such as a hume pipe or a manhole, and has a cylindrical inner mold 5, a cylindrical outer mold 6 and an end plates 7 arranged at both ends thereof.

Inner mold 5 specifies the inner peripheral surface of the cylindrical product to be produced and is made by a member whose outer peripheral surface is formed in a columnar shape with a predetermined length. Outer mold 6 specifies the outer peripheral surface of the cylindrical product to be produced and is made by a member which has an inside diameter larger than the outside diameter of inner mold 5, and is formed in a cylindrical shape with a predetermined length. End plates 7 specify both end faces of the cylindrical product to be produced, and is formed in a donut plate shape or in a circular plate shape having an outside diameter equal to or larger than the outside diameter of outer mold 6, and is arranged at both ends of inner mold 5 and outer mold 6.

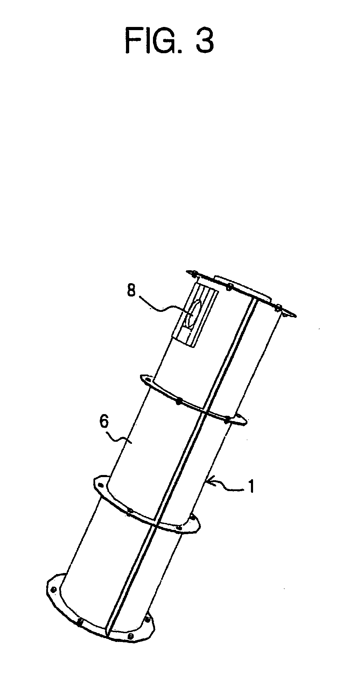

In this state, in a space surrounded by inner mold 5, outer mold 6, and end plates 7, the cavity which stores therein the sulfur-containing material being heated to a temperature within a preset temperature range of which a lower limit is equal to or above the melting point (119°C) of sulfur (for example, about from 120 to 150°C) to be in a melted state and can be hermetically sealed, is formed. As illustrated in Fig. 3, a filling port 8 of the sulfur-containing material communicating with the cavity is provided in a portion, e.g., the upper end, of outer mold 6. Although not illustrated in the figure, an air vent hole communicating with the cavity is formed in a portion, e.g., the upper end, of outer mold 6.

The outer peripheral portion of outer mold 6 is provided with heating means such as an electric heater, a hot-air heater, or an oil heater and is covered with a heat insulating material. The inside of outer mold 6 is heated to a temperature within the preset temperature range of which a lower limit is equal to or above a melting point of sulfur (for example, about from 120 to 150°C). Accordingly, in the range, the sulfur-containing material injected into outer mold 6 is maintained in a melted state without solidifying, and is spread to the entire cavity surrounded by inner mold 5, outer mold 6, and end plates 7.

As illustrated in Fig. 1, the above-mentioned mold body 1 is placed on vibrating table 3 and is supported in a tilted state. Vibrating table 3 has a vibrator 9 and a knocker 10, and is configured to vibrate the whole of mold body 1. Cylindrical mold body 1 may be divided into two parts so as to be in a semi-cylindrical shape along its longitudinal direction.

Mold body 1 illustrated in Figs. 1 and 3 indicates a mold shape in the case of molding the cylindrical product by modified sulfur concrete substance. In the case of manufacturing a product having a shape other than the cylindrical shape, the shape of inner mold 5, outer mold 6, and end plates 7 may be determined adapted to the shape of the product. When the shape of the product is not a pipe shape and is a plate shape, a board shape, or a block shape, inner mold 5 may be unnecessary.

The sulfur-containing material will be explained below. The sulfur-containing material is called a sulfur concrete substance produced by, using the characteristics that the sulfur is solid at room temperature while melted upon being heated to about 119 to 159°C, mixing sands, gravels, coal ashes or the like with the sulfur melted by being heated to a temperature within the preset temperature range of which a lower limit is equal to or above 119°C and kneading the mixed material while maintaining the temperature at about 119 to 159°C, and thereafter, cooling and hardening the kneaded material. The sulfur-containing material may be called a modified sulfur concrete substance produced by mixing the sulfur melted by being similarly heated to a temperature within the preset temperature range of which a lower limit is equal to or above 119°C with a sulfur modifying agent which denatures the melted sulfur to produce modified sulfur, and mixing sands, gravels, coal ashes or the like with the modified sulfur, and kneading the mixed material by being heated in a manner similar to the above, and thereafter, cooling and hardening the knead material. That is, the sulfur-containing material includes the sulfur concrete substance and the modified sulfur concrete substance. As used herein, the term "modified sulfur concrete substance" intends to include, but not limited to, "sulfur concrete substance".

The modified sulfur concrete substance will be further described in detail. The modified sulfur concrete substance is produced by using sulfur, a sulfur modifying agent, fine powders, and aggregate as materials. First, the melted sulfur and the sulfur modifying agent are mixed to produce the modified sulfur. Sulfur is usual simple sulfur and is, for example, natural sulfur or sulfur produced by desulfurizing petroleum or natural gas. The sulfur modifier performs modification by denaturing the melted sulfur, for example, polymerizing sulfur. The sulfur modifying agent may be any compound which can polymerize sulfur. For example, the sulfur modifier is olefinic hydrocarbon or diolefin hydrocarbon having carbon number of from 4 to 20, concretely, the sulfur modifier is one of a cyclic olefinic hydrocarbon such as limonene or pinene, aromatic hydrocarbon such as styrene, vinyl toluene, or methylstyrene, and diene hydrocarbon such as dicyclopentadiene (DCPD) and its oligomer, cyclopentadiene, tetrahydroindene (THI), vinylcyclohexene, vinylnorbornene, ethylidene norbornene, or cyclooctadiene, or a mixture of two or more of the hydrocarbons. The sulfur and the sulfur modifying agent are mixed in a state where sulfur is melted, that is, at a temperature range from 119 to 159°C, preferably, from 135 to 150°C.

The modified sulfur can be obtained by melt-mixing the sulfur with sulfur modifying agent. The percent of use of the sulfur modifying agent in this case is, preferably, from 0.1 to 30 percent by mass, more preferably, from 1.0 to 20 percent by mass to the total amount of sulfur and the sulfur modifying agent. The obtained modified sulfur is mixed with fine powders heated to a predetermined temperature (for example, 150°C), thereby obtaining a modified sulfur intermediate material. As the fine powders, one or more of coal ash, siliceous, silica fume, glass powders, fuel incineration, electrically collected dust and crushed sea shell may be selected.

The obtained modified sulfur intermediate material is mixed with the aggregate heated to, for example, about from 130 to 140°C in a state where the temperature is maintained at a temperature at which a melt state can be maintained (for example, from 130 to 140°C). The aggregate is not limited as long as it can be used as aggregate, and aggregate generally used for concrete can be used. Examples of such aggregate are one or more materials selected from the group of natural stones, sands, gravels, siliceous, iron and steel slag, ferronickel slag, copper slag, side product generated at the time of manufacturing a metal, liquid slags, shells and a mixture of the materials. By mixing the modified sulfur intermediate material and the aggregate by using, for example, a kneading unit, the modified sulfur material is produced, and thereafter, by cooling and solidifying the modified sulfur material, a modified sulfur concrete substance is produced. Such a modified sulfur concrete substance can be produced by using, for example, a modified sulfur concrete substance producing system disclosed in Japanese Patent Publication No. 4,007,997 (corresponding to EP-A-1886 781).

In the following description, such a sulfur concrete substance or a modified sulfur concrete substance is heated in the preset temperature range, and the resultant is used as a sulfur-containing material in a melt state.

Filling tank 2 is detachably attached to filling port 8 of mold body 1. As illustrated in Fig. 1, filling tank 2 receives the sulfur-containing material supplied from injecting hopper 4 storing the sulfur containing material therein, as indicated by an arrow A, from an upper end opening 11 thereof to supply the sulfur containing material into the cavity through filling port 8 of mold body 1 (refer to Fig. 3).

Injecting hopper 4 is made of a metal and formed in a funnel shape, and a volume of injecting hopper 4 is, for example, about 1.0 m³. The peripheral portion of injecting hopper 4 is provided with heating means such as an electric heater, a hot-air heater, or an oil heater and is covered with a heat insulating material. Injecting hopper 4 is heated to a temperature within the preset temperature range of which a lower limit is equal to or above the melting point of sulfur. The preset temperature range of the heating is preferably about from 120 to 150°C. In the range, the sulfur containing material in a melted state stored in injecting hopper 4 is maintained in a melted state without solidifying.

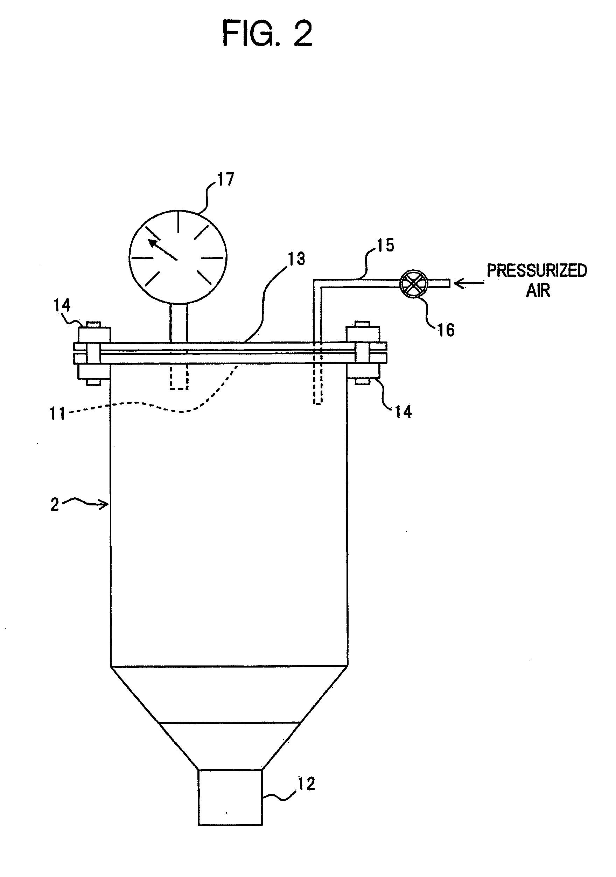

As illustrated in Fig. 2, the whole of filling tank 2 is made of a metal and formed in a funnel shape. A lower end indicating port 12 of filling tank 2 is detachably attached to filling port 8 of mold body 1. A cover 13 is attached to upper end opening 11 of filling tank 2 by fasteners 14 such as bolts in the state that a predetermined amount of the sulfur-containing material supplied from injecting hopper 4 illustrated in Fig. 1 is stored in filling tank 2, so that the inside of filling tank 2 can be hermetically sealed.

The volume of filling tank 2 is equal to or larger than the volume of the sulfur-containing material which is fully filled into the cavity of mold body 1 to be cooled and contracted. The contraction rate of the cooled and solidified sulfur-containing material is said to be 7 to 8% calculated in terms of volume. Therefore, the volume of filling tank 2 is 7 to 8% or above of the volume of the modified sulfur concrete substance product molded in the cavity of mold body 1.

Cover 13 of filling tank 2 is connected to a pressurized air supply pipe 15. The front end of supply pipe 15 is inserted into filling tank 2. Thus, the inside of filling tank 2 is pressurized to a predetermined pressure (for example, from 0.05 to 0.15 MPa). Although not illustrated in the figure, the base end portion of supply pipe 15 is connected to such as an air pump as pressurizing means. The supply of the pressurized air is controlled by an open and close valve 16. In Fig. 2, the reference numeral 17 denotes a pressure meter (which is attached to cover 13) measuring a pressure in filling tank 2.

The peripheral portion of filling tank 2 is provided with heating means such as an electric heater, a hot-air heater, or an oil heater and is covered with a heat insulating material. The inside of filling tank 2 is heated to a temperature within the preset temperature range of which a lower limit is equal to or above the melting point of sulfur. The preset temperature range of the heating is preferably about from 120 to 150°C. In the range, the sulfur-containing material in a melted state stored in filling tank 2 is maintained in a melted state without solidifying.

Filling tank 2 is attached to filling port 8 of mold body 1. The sulfur-containing material in a melted state is supplied from injecting hopper 4 to filling tank 2. The sulfur-containing material is supplied into the cavity of mold body 1. As the sulfur-containing material fully filled into the cavity of mold body 1 is cooled and contracted in the cavity, the sulfur-containing material stored in filling tank 2 is replenished into the cavity by a pressure in filling tank 2.

Next, with reference to Figs. 3 to 7, a use state of the molding apparatus for modified sulfur concrete substance product will be described.

In Fig. 1, mold body 1 is placed on vibrating table 3 and is supported in a tilted state. In this state, filling tank 2 is attached to filling port 8 provided at the upper end of outer mold 6 of mold body 1 illustrated in Fig. 3.

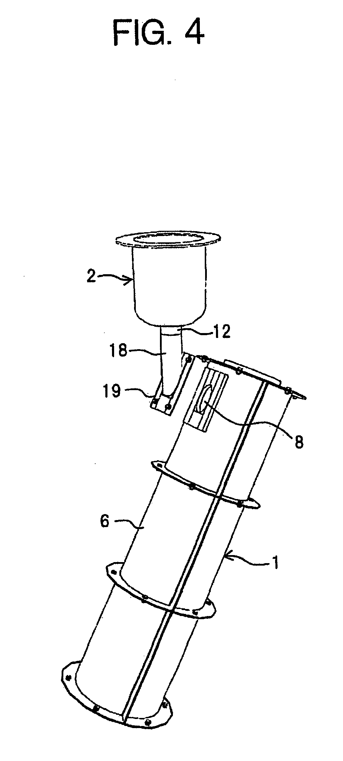

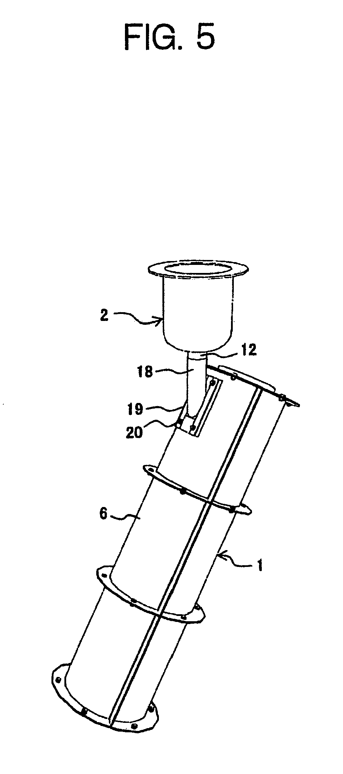

As illustrated in Fig. 4, an attaching plate 19 provided in a tilted state at the lower end of an attaching pipe 18 connected to lower end filling port 12 of filling tank 2 is aligned to filling port 8 of mold body 1 to communicate lower end filling port 12 of filling tank 2 with filling port 8 of mold body 1. As illustrated in Fig. 5, four corners of attaching plate 19 are secured by fasteners 20 such as bolts to attach filling tank 2 to filling port 8 of outer mold 6 of mold body 1. Attaching plate 19 of filling tank 2 is secured by fasteners 20 such as bolts, and therefore, filling tank 2 is detachably attached to filling port 8 of mold body 1. In this state, cover 13 illustrated in Fig. 2 is not attached to filling tank 2.

In such state, as illustrated in Fig. 1, injecting hopper 4 is aligned above filling tank 2 to supply the sulfur-containing material from an injecting port 21 of injecting hopper 4 to upper end opening 11 of filling tank 2, as indicated by the arrow A. Filling tank 2 receives the sulfur-containing material from upper end opening 11 thereof to subsequently supply the sulfur-containing material into the cavity through filling port 8 (refer to Fig. 3) of mold body 1.

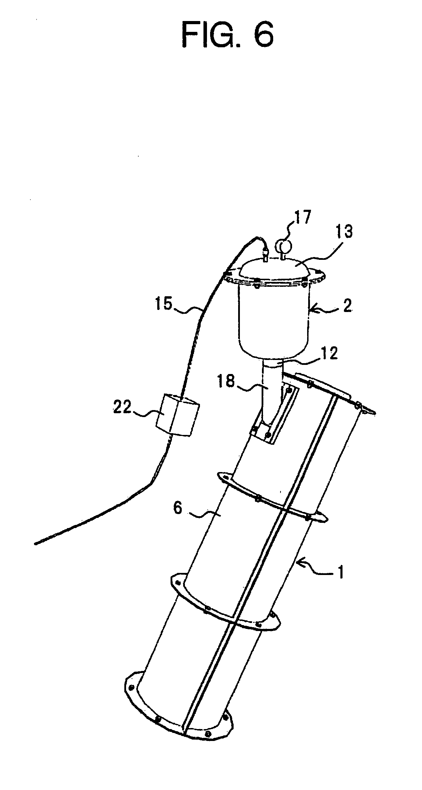

As described above, when the sulfur-containing material is fully filled into the cavity of mold body 1 and also when a predetermined amount of the sulfur-containing material is stored in filling tank 2, the injection of the sulfur-containing material from injecting hopper 4 is stopped. As illustrated in Fig. 6, cover 13 is attached to upper end opening 11 of filling tank 2 illustrated in Fig. 1 to thereby hermetically seal the inside of filling tank 2. Further, cover 13 is connected to pressurized air supply pipe 15 and the front end thereof is inserted into filling tank 2. To the base end of supply pipe 15, the air pump, not illustrated, is connected to supply pressurized air via a pressure adjuster 22. At this point, the inside of filling tank 2 is constantly pressurized to about 0.05 to 0.15 MPa.

In this state, in Fig. 6, the operation of the heating means of mold body 1 is stopped to stop heating the sulfur-containing material filled into mold body 1, and mold body 1 is left as it is. As mold body 1 is gradually cooled in an atmosphere at room temperature, the sulfur-containing material fully filled into the cavity of mold body 1 is cooled, contracted, and sunk in the cavity. As the sulfur-containing material in mold body 1 is contracted, the sulfur-containing material stored in filling tank 2 is replenished into the cavity of mold body 1 by a pressure in filling tank 2.

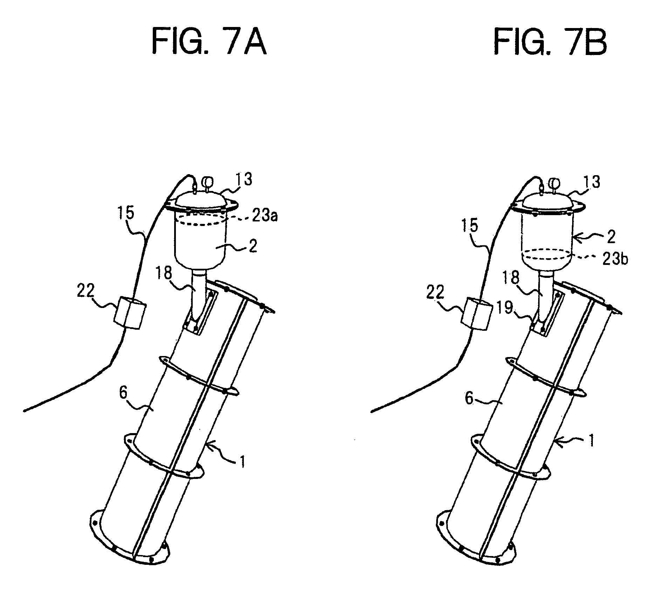

As illustrated in Fig. 7A, immediately after the sulfur-containing material is fully filled into the cavity of mold body 1, the sulfur-containing material is stored in filling tank 2 to a material position indicated by the reference numeral 23a. As described above, the operation of the heating means of mold body 1 is stopped, and mold body 1 is left to cool. After an elapse of an appropriate time, as illustrated in Fig. 7B, the sulfur-containing material in filling tank 2 is sunk to a material position indicated by the reference numeral 23b. In this case, as the sulfur-containing material in mold body 1 is contracted and sunk, the sulfur-containing material of which volume in filling tank 2 lowered from material position 23a to material position 23b is automatically replenished into the cavity of mold body 1. Time to leave and cool mold body 1 (refer to Fig. 7A) and to fill a predetermined amount of the sulfur-containing material from filling tank 2 into mold body 1 (refer to Fig. 7B) is about from two hours to two and a half hours.

After that, in Fig. 7B, attaching plate 19 at the lower end of attaching pipe 18 of filling tank 2 is detached to remove filling tank 2 from mold body 1, and then, mold body 1 is divided into two parts so as to be in a semi-cylindrical shape along its longitudinal direction to take out the modified sulfur concrete substance product which is cooled and solidified therein. In this state, as the sulfur-containing material is cooled and contracted in the cavity of mold body 1, the sulfur-containing material in the contracted amount thereof is automatically replenished from filling tank 2 and is solidified to mold the clean modified sulfur concrete substance product without a gap.

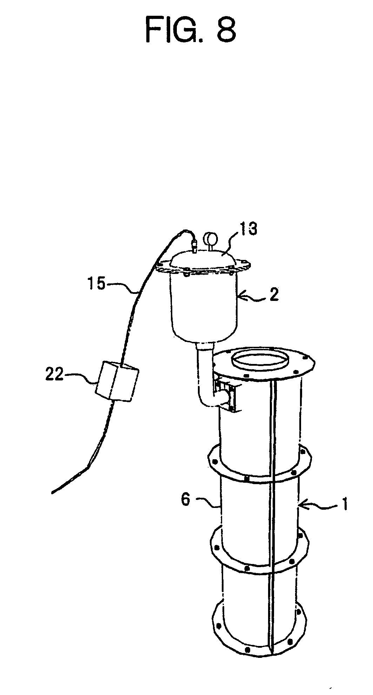

Fig. 8 is a perspective view illustrating another embodiment of the molding apparatus of the present invention.

In this embodiment, mold body 1 is supported in a vertical state on a table or a supporting base which is not illustrated, and also, filling tank 2 is detachably attached to the upper end of outer mold 6 of mold body 1. Except for this, this embodiment is the same as the embodiment illustrated in Fig. 1.

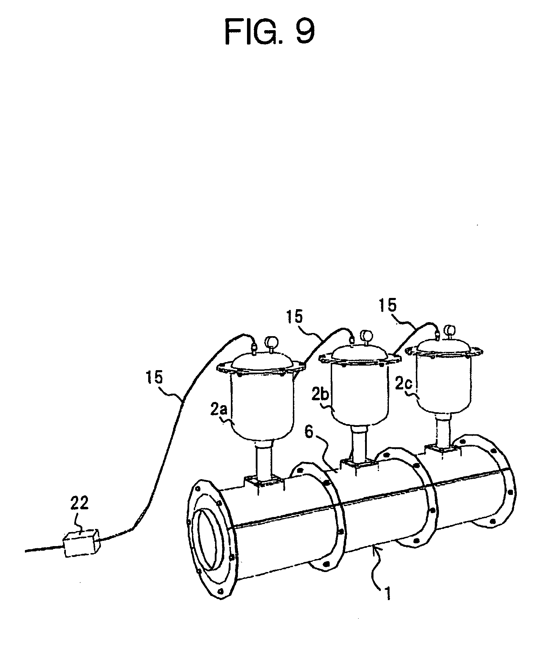

Fig. 9 is a perspective view illustrating a further embodiment of the molding apparatus of the present invention.

In this embodiment, mold body 1 is supported in a horizontal state on a table or a supporting base which is not illustrated, and also, a plurality of, e.g., three filling tanks 2a, 2b, and 2c, are detachably attached to the upper surface of outer mold 6 of mold body 1. The number of filling tanks 2 may be appropriately changed according to the volume of mold body 1. Except for this, this embodiment is the same as the embodiment illustrated in Fig. 1.

### INDUSTRIAL APPLICABILITY

The present invention can provide the sulfur solidified substance product having a high product value with high strength and good finishing without requiring excessive time and labor. Therefore, the industrial applicability is great.

## Claims

1. A molding apparatus for modified sulfur concrete substance product, comprising:
a mold body (1) in which an outer mold (6) thereof having a cavity which stores therein a sulfur-containing material being heated to a temperature within a preset temperature range of which a lower limit is equal to or above a melting point of sulfur to be in a melted state and can be hermetically sealed, is provided in a portion thereof with a filling port (8) for the sulfur-containing material communicating with the cavity, the inside of the outer mold being heated to a temperature within the preset temperature range by heating means; and
a filling tank (2) including a lower end filling port (12) detachably attached to the filling port (8) of the mold body (1), an upper end opening (11) which receives the sulfur-containing material supplied from an injecting hopper (4) storing the sulfur-containing material therein, and a cover (13) attached to the upper end opening (11) to hermetically seal the inside of the filling tank (2), in which the sulfur-containing material received from the upper end opening (11) is supplied into the cavity through the filling port (8) of the mold body (1), and in the state that a predetermined amount of the sulfur-containing material is stored in the filling tank (2) , the inside of the filling tank (8) hermetically sealed by the cover (13) is pressurized to a predetermined pressure by pressurizing means, and the inside of the filling tank is heated to a temperature within the preset temperature range by heating means,
wherein as the sulfur-containing material fully filled into the cavity of the mold body (1) is cooled and contracted in the cavity, the sulfur-containing material stored in the filling tank (2) is replenished into the cavity by a pressure in the filling tank (2).

2. The molding apparatus for modified sulfur concrete substance product according to claim 1, wherein the volume of the filling tank (2) is equal to or larger than the volume of the sulfur-containing material fully filled into the cavity of the mold body (1), which is cooled and contracted.

3. The molding apparatus for modified sulfur concrete substance product according to claim 1, wherein heating means is attached to each of the mold body (1) and the filling tank (2) to heat the mold body (1) and the filling tank (2) to a temperature within the preset temperature range of which a lower limit is equal to or above a melting point of sulfur.

4. The molding apparatus for modified sulfur concrete substance product according to claim 1, wherein plural filling ports (8) of the mold body (1) are provided in a portion of the outer mold (6), and plural filling tanks (2a, 2b, 2c) are attached to the mold body (1).

## Patentansprüche

1. Formpressvorrichtung für ein modifiziertes Schwefelbetonsubstanzprodukt, die Folgendes umfasst:
einen Formwerkzeugkörper (1), wobei ein äußeres Formwerkzeug (6) davon mit einer Höhlung, die darin ein schwefelhaltiges Material aufbewahrt, das auf eine Temperatur innerhalb eines voreingestellten Temperaturbereichs erhitzt wird, von dem eine untere Grenze gleich einem oder oberhalb eines Schmelzpunkts von Schwefel ist, so dass dieser in einem geschmolzenen Zustand ist, und luftdicht verschlossen werden kann, in einem Teil davon mit einem Füllanschluss (8) für das schwefelhaltige Material versehen ist, der mit der Höhlung in Verbindung steht, wobei das Innere des äußeren Formwerkzeugs durch ein Heizmittel auf eine Temperatur innerhalb des voreingestellten Temperaturbereichs erhitzt wird; und
einen Füllbehälter (2), der einen Füllanschluss (12) am unteren Ende, der abnehmbar an dem Füllanschluss (8) des Formwerkzeugkörpers (1) angebrächt ist, eine Öffnung (11) am oberen Ende, die das schwefelhaltige Material aufnimmt, das von einem Spritztrichter (4) zugeführt wird, der das schwefelhaltige Material darin aufbewahrt, und einen Deckel (13) aufweiset, der an der Öffnung (11) am oberen Ende angebrächt ist, um das Innere des Füllbehülters (2) luftdicht zu verschließen, wobei das schwefelhaltige Material, das von der Öffnung (11) am oberen Ende aufgenommen wird, durch den Füllanschluss (8) des Formwerkzeugkörpers (1) in die Höhlung zugeführt wird und in dem Zustand ist, dass eine vorher festgelegte Menge des schwefelhaltigen Materials in dem Füllbehälter (2) aufbewahrt wird, wobei das Innere des Füllbehälter (2), das von dem Deckel (13) luftdicht verschlossen wird, durch ein Druckbeaufschlagungsmittel auf einen vorher festgelegten Druck druckbeaufschlagt wird und das Innere des Füllbehälter durch ein Heizmittel auf eine Temperatur innerhalb des voreingestellten Temperaturbereichs erhitzt wird,
wobei, während das vollständig in die Höhlung des Formwerkzeugkörpers (1) gefüllte schwefelhaltige Material in der Höhlung abgekühlt und kontrahiert wird, das schwefelhaltige Materials, das in dem Füllbehälter (2) aufbewahrt wird, durch einen Druck in dem Füllbehälter (2) in die Höhlung nachgefüllt wird.

2. Formpressvorrichtung für ein modifiziertes Schwefelbetonsubstanzprodukt nach Anspruch 1, wobei das Volumen des Müllbehälters (2) gleich dem oder größer als das Volumen des vollständig in die Höhlung des Formwerkzeugkörpers (1) gefüllten schwefelhaltigen Materials ist, das abgekühlt und kontrahiert wird.

3. Formpressvorrichtung für ein modifiziertes Schwefelbetonsubstanzprodukt nach Anspruch 1, wobei jeweils ein Heizmittel an dem Formwerkzeugkörper (1) und dem Füllbehälter (2) angebracht ist, um den Formwerkzeugkörper (1) und den Füllbehälter (2) auf eine Temperatur innerhalb des voreingestellten Temperaturbereichs zu erhitzen, von dem eine untere Grenze gleich einem oder oberhalb eines Schmelzpunkts von Schwefel ist.

4. Formpressvorrichtung für ein modifiziertes Schwefelbetonsubstanzprodukt nach Anspruch 1, wobei mehrere Füllanschlüsse (8) des Formwerkzeugkörpers (1) in einem Teil des äußeren Formwerkzeugs (6) vorgesehen sind und mehrere Füllbehälter (2a, 2b, 2c) an dem Formwerkzeugkörper (1) angebracht sind.

## Revendications

1. Appareil de moulage pour produit de substance de béton au soufre modifié comprenant:
un corps de moule (1), dans lequel un moule extérieur (6) de ce corps, présentant une cavité dans laquelle est stockée une matière contenant du soufre chauffée à une température comprise dans une plage de température prédéterminée dont une limite inférieure est supérieure ou égale à un point de fusion du soufre pour se trouver dans un état fondu, et qui peut être hermétiquement fermée, est équipé, dans une certaine partie, d'un orifice de remplissage (8) de la matière contenant du soufre qui communique avec la cavité, l'intérieur du moule extérieur étant chauffé par des moyens de chauffage à une température comprise dans la plage de température prédéterminée; et
une cuve de remplissage (2) qui comprend un orifice de remplissage d'extrémité inférieure (12) qui est fixé de façon amovible à l'orifice de remplissage (8) du corps de moule (1), une ouverture d'extrémité supérieure (11) qui reçoit la matière contenant du soufre acheminée depuis une trémie d'injection (4) dans laquelle est stockée la matière contenant du soufre, et un couvercle (13) fixé à l'ouverture d'extrémité supérieure (11) et servant à fermer hermétiquement l'intérieur de la cuve de remplissage (2), dans laquelle la matière contenant du soufre provenant de l'ouverture d'extrémité supérieure (11) est introduite dans la cavité à travers l'orifice de remplissage (8) du corps de moule (1), et dans l'état où une quantité prédéterminée de la matière contenant du soufre est stockée dans la cuve de remplissage (2), l'intérieur de la cuve de remplissage (2) hermétiquement fermée par le couvercle (13) est mis sous pression à une pression prédéterminée par des moyens de mise sous pression, et l'intérieur de le cuve de remplissage est chauffé à une température comprise dans la plage de température prédéterminée par des moyens de chauffage,
dans lequel, au fur et à mesure que la matière contenant du soufre qui a rempli entièrement la cavité du corps de moule (1) se refroidit et se rétracte dans la cavité, de la matière contenant du soufre stockée dans la cuve de remplissage (2) est rechargée dans la cavité sous l'effet d'une pression établie dans la cuve de remplissage (2).

2. Appareil de moulage pour produit de substance de béton au soufre modifié selon la revendication 1, dans lequel le volume de la cuve de remplissage (2) est supérieur ou égal au volume de la matière contenant du soufre remplissant entièrement la cavité du corps de moule (1) qui est refroidie et rétractée.

3. Appareil de moulage pour produit de substance de béton au soufre modifié selon la revendication 1, dans lequel des moyens de chauffage sont fixés à chacun du corps de moule (1) et de la cuve de remplissage (2), afin de chauffeur le corps de moule (1) et la cuve de remplissage (2) à une température comprise dans la plage de température prédéterminée dont une limite inférieure est supérieure ou égale au point de fusion du soufre.

4. Appareil de moulage pour un produit de substance de béton au soufre modifié selon la revendication 1, dans lequel plusieurs orifices de remplissage (8) du corps de moule (1) sont disposés dans une partie du moule extérieur (6) et plusieurs cuves de remplissage (2a, 2b, 2c) sont fixées au corps de moule (1).
